# EUROPEAN PATENT SPECIFICATION

(11) **EP 1 882 866 B1**
(45) Date of publication and mention of the grant of the patent: **09.09.2009**
(21) Application number: 07112728.6
(22) Date of filing: 19.07.2007
(51) Int. Cl.: F16D 25/0638, F16H 57/02, F16H 59/42

(54) **Automatic transmission**
Automatisches Getriebe
Transmission automatique

(30) Priority: 24.07.2006 JP 2006200380; 02.08.2006 JP 2006210622
(43) Date of publication of application: 30.01.2008
(73) Proprietor: Mazda Motor Corporation, Aki-gun Hiroshima 730-8670 (JP)
(72) Inventor: Iwasaki, Tatsuhiko, Hiroshima 730-8670 (JP); Doi, Junichi, Hiroshima 730-8670 (JP); Mizobe, Tatsutoshi, Hiroshima 730-8670 (JP); Sakaue, Naohiro, Hiroshima 730-8670 (JP)
(74) Representative: Zinnecker, Armin

(56) References cited:
- US-A1- 2005 082 136

## Description

### Background of the Invention

### Field of the Invention

The present invention relates to an automatic transmission for a vehicle, and particularly relates to a technology for size reduction thereof.

### Description of the Related Art

Conventionally, an automatic transmission has been known which includes a drum connected to the input shaft of the transmission, a hub connected to the output section thereof, and a multiple-disc clutch that connects/disconnect the drum from the hub.

An automatic transmission disclosed in, for example, Japanese Patent Application Laid Open Publication No. 2003-106342 includes a multiple-disc clutch, a hub provided inside the multiple-disc clutch, a drum provided outside the multiple-disc clutch, a piston for pushing the multiple-disc clutch, and a hydraulic servo for controlling the piston. The servo is provided at the drum in general.

Referring to another automatic transmission disclosed in Japanese Patent Application Laid Open Publication No. 2003-106450, there are provided a multiple-disc clutch, a hub for supporting at the outer periphery thereof the multiple-disc clutch, a drum for supporting at the inner periphery thereof the multiple-disc clutch, a piston for pushing the multiple-disc clutch, a hydraulic servo provided at the drum for controlling the piston, a rotation sensor for detecting the rotation of the hub, and an input side rotation speed sensor for detecting the rotation speed of an input side rotation element (an input shaft), wherein the input side rotation speed sensor detects the number of rotation of an outer peripheral part of the drum.

In recent years, demand for higher power of engines is increasing while there are another demand for size reduction of automatic transmissions accompanied by restriction on vehicle size.

In the vicinity of the multiple-disc clutch of the conventional automatic transmission, however, since difference in number of rotation between the hub connected to the output section and the piston provided at the drum connected to the input shaft of the transmission will be caused by connection/disconnection therebetween by the multiple-disc clutch. This requires creation of clearance to some extent between the hub and the piston, which inhibits overlap between the hub and the piston in the axial direction of the input shaft to prevent the automatic transmission from being compacted sufficiently.

While, when the hydraulic servo is provided at the hub connected to the input shaft, rather than the drum connected to the output section and the hub is overlapped with the piston in the axial direction, the number of rotation of the hub cannot be detected in the automatic transmission of Japanese Patent Application Laid Open Publication No. 2003-106342 because the hub is arranged inside the drum to be covered with the drum. Accordingly, the number of rotation of the input shaft must be measured directly. When doing so, however, detection accuracy becomes worse because of a small diameter of the input shaft at which the rotation is to be detected. Further, difficulty in ensuring space for the input side rotation speed sensor is involved.

An automatic transmission having the features of the preamble part of claim 1 is known from US 2005/082136 A1.

### Summary of the Invention

The present invention has been made in view of the foregoing and has its object of reducing the size of an automatic transmission by overlapping a piston with a hub in an axial direction.

To attain the object, in the present invention, the hydraulic servo is provided at the hub connected to the input shaft rather than at the drum connected to the output section.

Specifically, the present invention provides an automatic transmission which includes a first rotary member connected to an input shaft of the automatic transmission; a second rotary member connected to an output section of the automatic transmission; and a multiple-disc clutch that connects/disconnects the first rotary member to/from the second rotary member. The automatic transmission further includes: a hub provided inside the multiple-disc clutch; a drum provided around the multiple-disc clutch; a piston which pushes the multiple-disc clutch; and a hydraulic servo that controls the piston, the hydraulic servo being provided at the hub or a member connected to the hub, wherein a plurality of notched portions are formed in the piston and the hub with positions thereof displaced from each other in a peripheral direction, and the piston and the hub are overlapped with each other in an axial direction in such a fashion that parts of one of the piston and the hub where no notched portions are formed are inserted into the notched portions of the other.

With the above arrangement, the hydraulic servo is provided at the hub connected to the input shaft or the member connected to the hub so that the piston and the hub rotate integrally with each other. This eliminates the need to create clearance for contact prevention therebetween. When the plurality of notched portions are formed in both the piston and the hub with the positions thereof displaced with each other in the peripheral direction, insertion of parts of the hub where no notched portions are formed into the notched portions of the piston results in overlap between the piston and the hub in the axial direction. Hence, the length in the axial direction of the automatic transmission can be reduced, thereby reducing the size as a whole.

According to the present invention, the above automatic transmission further includes: a transmission casing surrounding the automatic transmission and including a transmission casing side wall; and a boss which extends in the axial direction from an axial center of the transmission casing side Wall and through which the input shaft is inserted, wherein the first rotary member includes: the hub; a sleeve rotatably fitted to the boss; and a first annular portion connecting the hub and the sleeve.

With the above arrangement, the hub is connected by the first annular portion to the sleeve rotatably fitted to the boss extending from the transmission casing, so that pressurized operation oil can be supplied from the boss to the hydraulic servo. This eliminates the need to provide an additional high-pressure oil supply path, thereby shortening the length in the axial direction of the automatic transmission to reduce the size as a whole.

Referring to a particular embodiment of the present invention, in the above automatic transmission, the piston includes: a second annular portion having an inner peripheral part sliding on an outer periphery of the sleeve and extending radially outwardly; a cylindrical portion connected to an outer periphery of the second annular portion and extending toward the transmission casing side wall; and a third annular portion connected to an end part on the transmission casing side wall side of the cylindrical portion and extending in a radial direction.

The above arrangement reduces the piston in size, so that the piston is easily arranged at the hub or the member connected to the hub. Hence, the length in the axial direction of the automatic transmission is shortened to achieve size reduction as a whole.

Referring to a further particular embodiment of the present invention, the above automatic transmission further includes a sealing plate which includes an inner peripheral part caught immovably toward the transmission casing side wall by the outer periphery of the sleeve and which extends radially outwardly so as to slide at an outer periphery thereof on an inner periphery of the cylindrical portion, wherein the piston forms a pressure chamber in a region surrounded by the sleeve, the second annular portion, the cylindrical portion, and the sealing plate.

With the above arrangement, the pressure chamber is formed inside the hub to reduce the hydraulic servo in size. This shortens the length in the axial direction of the automatic transmission, resulting in size reduction as a whole.

In a further particular embodiment of the present invention, the hub includes a fourth annular portion cylindrically extending toward the transmission casing side wall, the second annular portion includes an outer peripheral part sliding on an inner peripheral face of the fourth annular portion, and the piston forms a balancing chamber in a region surrounded by the sleeve, the first annular portion, the fourth annular portion, and the second annular portion.

With the above arrangement, the sealing plate of the balancing chamber can be used as a connecting member between the hub and the sleeve, thereby achieving reduction in size of the hydraulic servo. Accordingly, the length in the axial direction of the automatic transmission is shortened, resulting in size reduction as a whole.

In a further particular embodiment of the present invention, an operation oil supply guide is formed in the first annular portion for supplying operation oil to the hub from an opposite side of the first annular portion to the piston.

With the above arrangement, though the operation oil must be supplied to the hub from the opposite side of the piston because the piston is arranged inside the hub, the operation oil can be supplied to the hub therefrom along the operation oil supply guide formed in the first annular portion. This eliminates the need to provide an additional operation oil supply path, shortening the length in the axial direction of the automatic transmission to reduce the size as a whole.

A further particular embodiment of the present invention provides a rotation sensor at the exterior of the drum and a to-be-detected part at which rotation sensor detects the rotation is set at the piston.

Specifically, the above automatic transmission further includes: a rotation sensor which detects rotation of the hub, the rotation sensor being provided at an exterior of the drum, wherein the piston and the hydraulic servo are provided at the hub or a member connected to the hub, and a to-be-detected part at which the rotation sensor detects the rotation thereof is provided at the piston.

With the above arrangement, the hub is provided inside the drum to be covered with the drum, thereby disabling direct detection of the number of rotation of the hub. On the other hand, the piston and the hydraulic servo are provided at the hub connected to the input shaft or the member connected to the hub so that the piston and the hub rotate integrally with each other. When the to-be-detected part where the rotation of the hub is detected is set at the piston, the number of rotation of the hub can be detected by the rotation sensor provided at the exterior of the drum through detection of the rotation of the piston. Further, the piston provided at the hub or the member connected to the hub can be utilized effectively for detecting the number of rotation of the hub, leading to space saving.

In a further particular embodiment of the present invention, the to-be-detected part for the rotation sensor extends radially from an outer peripheral end of the piston on a side open to the drum and further extends in the axial direction between the rotation sensor and the drum.

With the above arrangement, the to-be-detected part for the rotation sensor extends from the outer peripheral end of the piston so as to cover the drum and is located between the drum and the rotation sensor, so that the rotation sensor, which is arranged at the same position as that of the conventional case though, can detect the number of rotation of the hub. Further, effective utilization of the piston for rotation detection achieves size reduction of the to-be-detected part.

As described above, in the present invention, the hydraulic servo is provided at the hub connected to the input shaft or the member connected to the hub and the piston and the hub are overlapped with each other in the axial direction, so that the length of the automatic transmission is reduced in the axial direction, resulting in size reduction thereof as a whole.

Further, provision of the rotation sensor at the exterior of the drum and the to-be-detected part for the rotation sensor at the piston enables the rotation sensor at the exterior of the drum to measure the number of rotation of the hub with the automatic transmission reduced in size.

### Brief Description of the Drawings

FIG. **1** is a schematic diagram showing a whole construction of an automatic transmission in accordance with an embodiment of the present invention.
FIG. **2** is a sectional view in an enlarged scale showing a forward clutch and the vicinity thereof.
FIG. **3** is a perspective view showing the forward clutch and the vicinity thereof.
FIG. **4** is a perspective view showing hub side clutch discs to which a hub is fitted.
FIG. **5** is a perspective view showing drum side clutch discs to which a drum is fitted.
FIG. **6** is a perspective view of the hub as viewed from a transmission casing side wall.
FIG. **7** is a perspective view of a piston as viewed from the opposite side to the transmission casing side wall.

### Description of the Preferred Embodiment

One embodiment of the present invention will be described below with reference to the accompanying drawings.

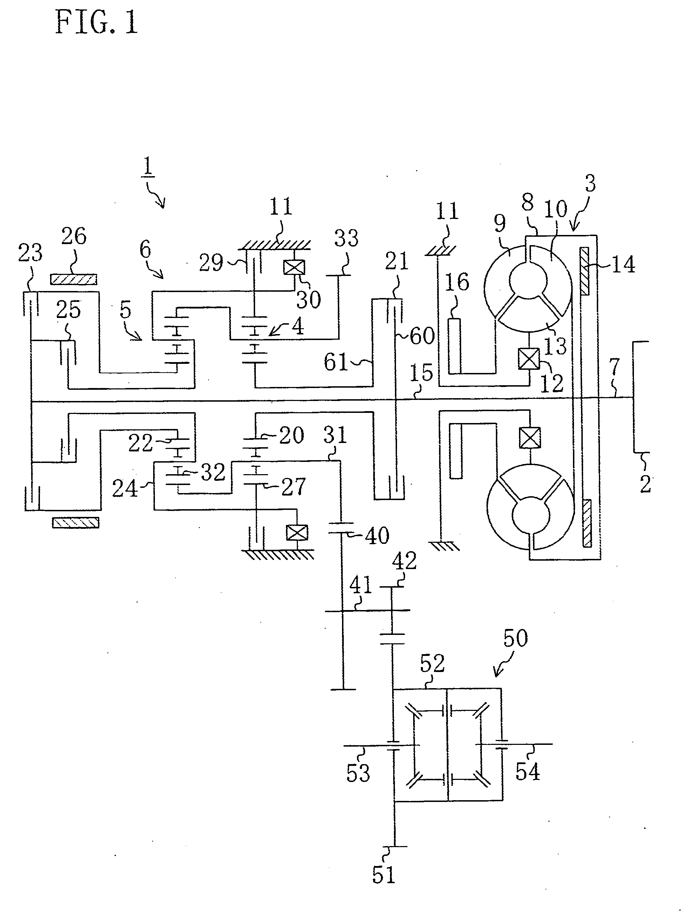

FIG. **1** shows a whole construction of an automatic transmission in accordance with the embodiment of the present invention. As shown in FIG. **1****,** the automatic transmission **1** includes a torque converter **3** to which the output of an engine **2** is input and a transmission gear mechanism **6** including first and second planetary gears (planetary gear mechanisms) **4, 5**.

The torque converter **3** includes an impeller pump **9**, a turbine runner **10,** a stator **13**, and a lockup clutch **14.** The impeller pump **9** is fixed within a converter casing **8** connected to an engine output shaft **7**. The turbine runner **10** is arranged so as to face the impeller pump **9** and is driven by operation oil from the impeller pump **9**. The stator **13** is arranged between the impeller pump **9** and the turbine runner **10** and is supported by a transmission casing **11** through a one-way clutch **12.** The lockup clutch **14** is arranged between the converter casing **8** and the turbine runner **10** for directly connecting the engine output shaft **7** to the turbine runner **10.**

The output of the engine **2** is input from the engine output shaft **7** to the torque converter **3**, is converted to torque, and is then output to the transmission gear mechanism 6 via a turbine shaft **15** serving as an input shaft. An oil pump **16** is arranged on the opposite side of the torque converter **3** to the engine **2** and is driven by the engine output shaft **7** via the converter casing **8** and the impeller pump **9**.

The transmission gear mechanism **6** includes a forward clutch **21**. as a multiple-disc clutch between the turbine shaft **15** and a sun gear **20** of the first planetary gear **4**. A reverse clutch **23** is provided between the turbine shaft **15** and a sun gear **22** of the second planetary gear **5**. Between the turbine shaft **15** and a pinion carrier **24** of the second planetary gear **5,** there are provided a 3-4 clutch **25** and a 2-4 brake **26** fixing the sun gear **22** of the secondary planet gear **5**. A ring gear **27** of the first planetary gear **4** is connected to the pinion carrier **24** of the second planetary gear **5**. Between them and the transmission casing **11**, a low reverse brake **29** and a one-way clutch **30** are arranged in parallel with each other. A pinion carrier **31** of the first planetary gear **4** is connected to a ring gear **32** of the second planetary gear **5**, and an output gear **33** are connected to them as an output section.

An intermediate transmission mechanism is formed of a combination of a first intermediate gear **40** engaging all the time with the output gear **33,** an idle shaft **41** having an end to which the first intermediate gear **40** is fixed, and a second intermediate gear **42** fixed to the other end of the idle shaft **41.** The second intermediate gear **42** engages with an input gear **51** of a differential unit **50** so that the output of the transmission gear mechanism **6** is transmitted to the differential unit **50** via a differential casing **52** and then to left and right drive shafts **53, 54.**

Table 1 indicates relationships between the transmission stages and the operation states of the respective friction elements **21, 23, 25, 26, 29** and the one-way clutch **30**.

**Table 1**

| | Forward clutch **21** | Reverse clutch **23** | 3-4 clutch **25** | 2-4 brake **26** | Low reverse brake **29** | One-way clutch **30** |
|---|---|---|---|---|---|---|
| First | X | | | | (X) | X |
| Second | X | | | X | | |
| Third | X | | X | | | |
| Fourth | | | X | X | | |
| Reverse | | X | | | X | |

| | | | | | | |
|---|---|---|---|---|---|---|
| (X) : operation only at low range | | | | | | |

Detailed description will be given next to the forward clutch **21** and the vicinity thereof, which presents the significant feature of the present invention.

The automatic transmission **1** includes a first rotary member **60** connected to the turbine shaft **15** serving as the input shaft, a second rotary member **61** connected to the output gear **33**, and the forward clutch **21** which connects/disconnects the first rotary member **60** to/from the second rotary member **61**.

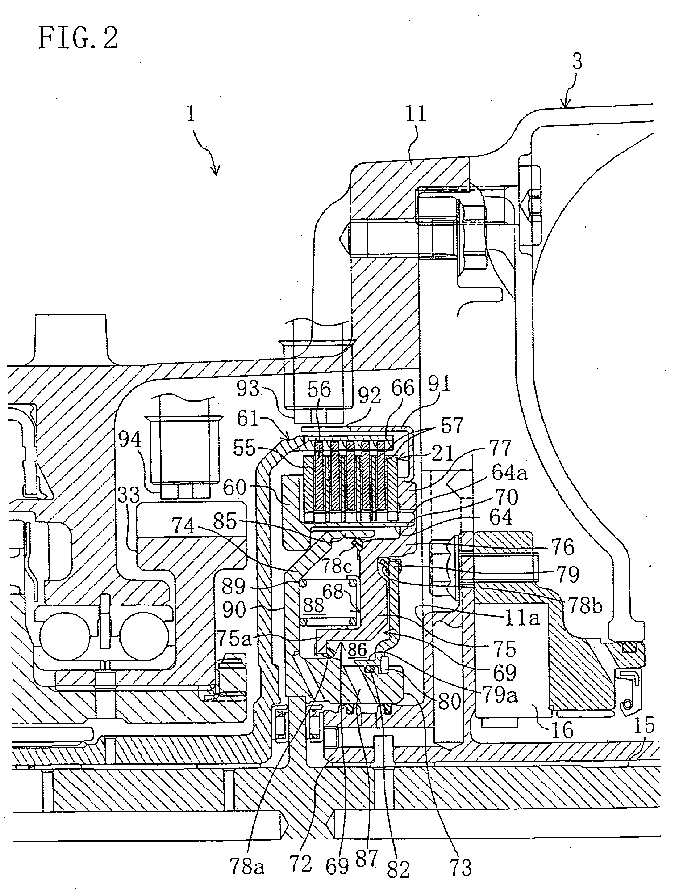

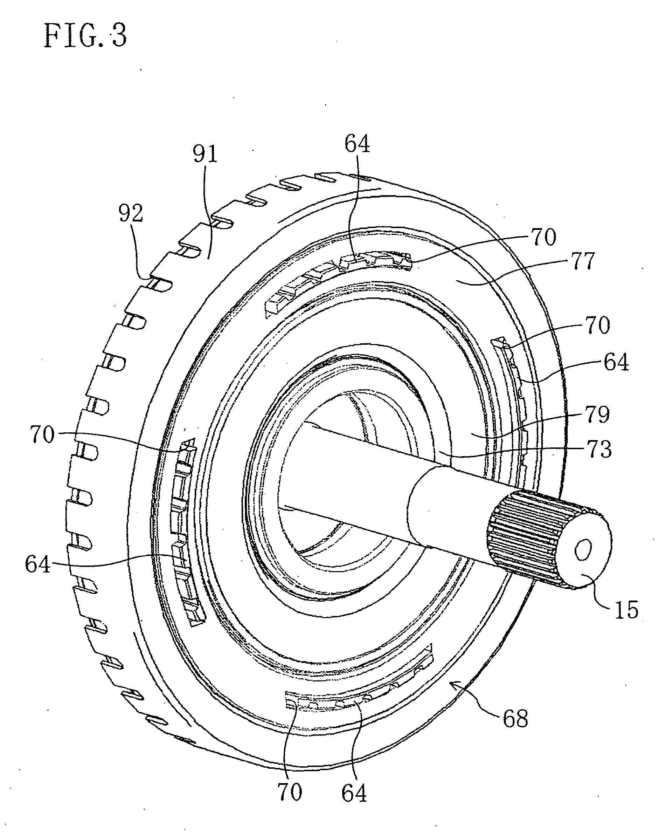

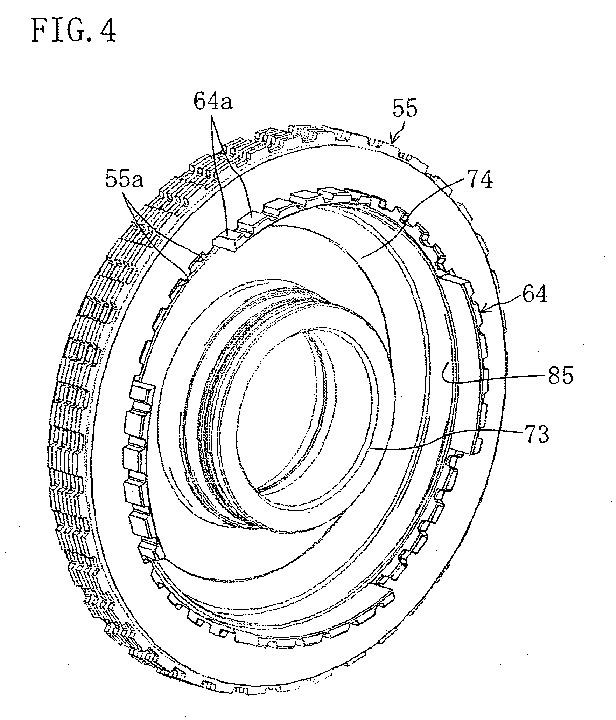

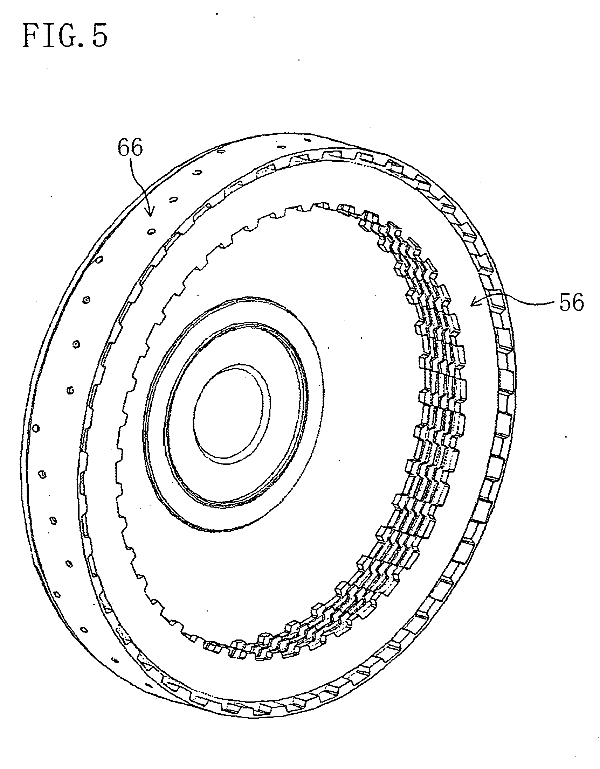

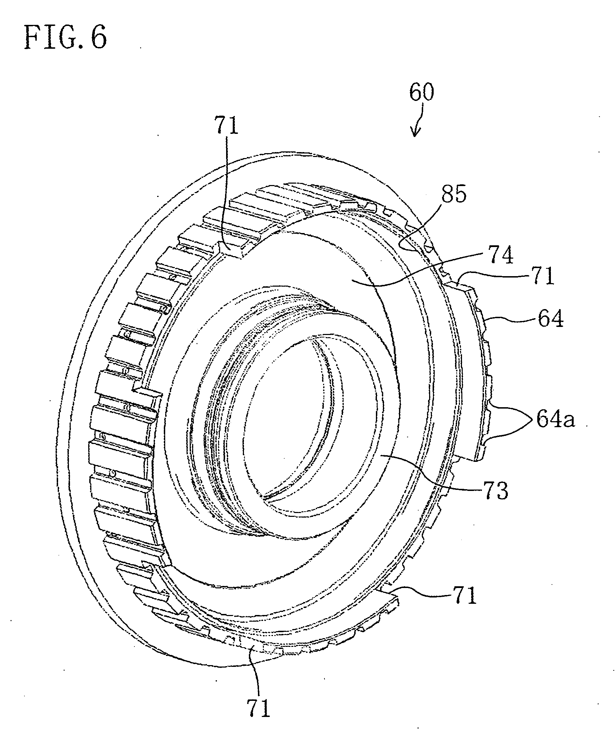

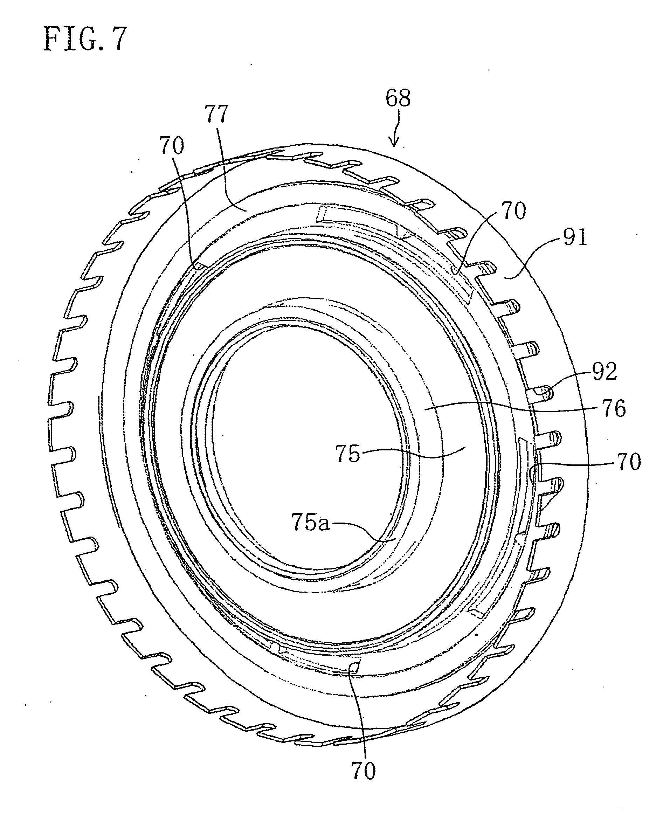

FIG. **2** is a sectional view in an enlarged scale showing the forward clutch **21** and the vicinity thereof. FIG. **3** shows the forward clutch **21** and members therearound. FIG. **4** shows hub side clutch discs to which a hub is fitted. FIG. **5** shows drum side clutch discs to which a drum is fitted. FIG. **6** and FIG. **7** show the hub and a piston, respectively.

As shown in FIG. **2**, the forward clutch **21** includes at the inner periphery thereof a plurality of hub side clutch discs **55** while including at the outer periphery thereof a plurality of drum side clutch discs **56**. A friction member **57** is attached to each face of the hub side clutch discs **55** except each outer face of the hub side clutch discs **55** on the respective sides. On the other hand, no friction member is attached to the drum side clutch discs **56**. The friction members **57** are provided to only the hub side clutch discs **55** connected to the turbine shaft **15** for reducing drag torque by repulsion. The hub side clutch discs **55** on the respective sides are formed thicker than those arranged therebetween for preventing them from falling down.

A boss **72** which extends in the axial direction of the turbine shaft **15** away from the engine **2** and through which the turbine shaft **15** is inserted is formed at the axial center of a transmission casing side wall **11a** serving as a side wall on the engine **2** side of the transmission casing **11.** The first rotary member **60** is fitted rotatably to the boss **72.** The first rotary member **60** is formed of, as shown in FIG. **6****,** a combination of a hub **64,** a sleeve **73** rotatably fitted to the boss **72**, and a first annular part **74** connecting the hub **64** and the sleeve **73**. The hub **64** includes an outer periphery in which projections and depressions as a hub side clutch fitting part **64a** are formed correspondingly to the hub side clutch discs **55.** As shown in FIG. **4**, the hub side clutch discs **55** are connected at the inner peripheries thereof to the hub **64** integrally rotatably. Specifically, a clutch side fitting part **55a** is formed in the inner peripheries of the hub side clutch discs **55** so as to engage with the hub side clutch fitting part **64a.** The hub side clutch discs **55** are supported at the outer peripheral face of the hub **64**. A plurality (four in the present embodiment) of hub side notched portions **71** is formed at parts of the hub **64** with space left in the peripheral direction. A fourth annular portion **85** is formed at the inner periphery of the hub **64** so as to extend cylindrically toward the transmission casing side wall **11a** coaxially with the hub **64.**

In the forward clutch **21,** the drum side clutch discs **56** are connected at the outer peripheries thereof to a drum **66** integrally rotatably in such a fashion that respective projections and depressions of both of them engage with each other, as shown in FIG. **5**. In other words, the drum side clutch **56** is supported at the inner peripheral face of the drum **66**.

As shown in FIG. **2****,** a piston **68** for pushing the forward clutch **21** is provided on the transmission casing side wall **11a** side of the hub **64**. The piston **68** includes a first lip sealing **78a** at an inner peripheral part **75a** thereof which slides on the sleeve **73** and a second annular portion **75** radially extending from the inner peripheral part **75a** thereof. As also shown in FIG. **7****,** the piston **68** includes a cylindrical portion **76** connected to the outer peripheral part of the second annular portion **75** and extending toward the transmission casing side wall **11a**. A third annular portion **77** extends radially from the end on the transmission casing side wall **11a** side of the cylindrical portion **76.**

A plurality (four in the present embodiment) of piston side notched portions **70** are formed in parts of the third annular portion **77** of the piston **68** so as to be displaced from the hub side notched portions **71** of the hub **64** in the peripheral direction. With the notched portions **70, 71** formed, parts of the hub **64** where the hub side notched portions **71** are not formed can be inserted into the piston side notched portions **70** of the piston **68,** as shown in FIG. **3**. The piston **68**, which is compacted, can be easily arranged on the transmission casing side wall **11a** side of the hub **64**. The hub **64** and the piston **68** are arranged compactly in such a fashion that they are overlapped with each other in the axial direction by inserting the parts of one of the hub **64** and the piston **68** where no notched portions are formed into the notched portions **70** or **71** of the other, resulting in reduction in length of the automatic transmission **1** in the axial direction.

A hydraulic servo **69** for controlling the piston **68** is arranged inside the hub **64.** Specifically, a sealing plate **79** is provided at the outer periphery of the sleeve **73** and includes an inner peripheral part **79a** caught immovably toward the transmission casing side wall **11a** by an annular stopper plate **80.** An O ring **82** is provided between the inner peripheral part **79a** of the sealing plate **79** and the outer periphery of the sleeve **73** for preventing oil leakage while a second lip sealing **78b** is provided at the outer periphery of the radially outwardly extending sealing plate **79** so as to slide on the inner periphery of the cylindrical portion **76.**

The piston **68** forms a pressure chamber **86** in a region which is surrounded by the sleeve **73,** the second annular portion **75,** the cylindrical portion **76,** and the sealing plate **79** and which is prevented from oil leakage by the first and second lip sealings **78a, 78b** and the O ring **82.** Formation of the pressure chamber **86** inside the hub **64** reduces the size of the hydraulic servo **69.** To the pressure chamber **86,** high-pressure oil from the oil pump **16** is supplied through a high-pressure oil supply path **87** formed in the boss **72** and the sleeve **73.** The hub **64** is connected through the first annular portion **74** to the sleeve **73** rotatably fitted to the boss **72** extending from the transmission casing **11**, so that the operation oil pressurized in the oil pump **16** can be supplied through the boss **72** to the hydraulic servo **69.** This eliminates the need to provide an additional high-pressure oil supply path, shortening the length in the axial direction of the automatic transmission **1**.

A third lip sealing **78c** provided at the outer periphery of the second annular portion **75** slides on the inner peripheral face of the fourth annular portion **85.** The piston **68** forms a balancing chamber **88** in a region which is surrounded by the sleeve **73,** the first annular portion **74**, the fourth annular portion **85**, and the second annular portion **75** and is prevented from oil leakage by the first and third two lip sealings **78**. Within the balancing chamber **88,** a plurality of return springs **89** are arranged in the peripheral direction for pushing the second annular portion **75** of the piston **68** toward the transmission casing side wall **11a.** Thus, the first annular portion **74** and the fourth annular portion **85,** which serve in combination as a joint member between the hub **64** and the sleeve **73,** also serve as a sealing plate of the balancing chamber **88,** achieving further size reduction of the hydraulic servo **69**.

In the first annular portion **74**, an operation oil supply guide **90** is formed for supplying the operation oil to the hub **64** from the opposite side of the first annular portion **74** to the piston **68.** Namely, though the arrangement of the piston **68** inside the hub **64** necessitates supply of the operation oil to the hub **64** from the opposite side to the piston **68**, an additional operation oil supply path therefor is unnecessary because the operation oil supply guide **90** formed in the first annular portion **74** guides and supplies the operation oil to the hub **64**.

As shown in FIG. **2**, an input side rotation sensor **93** for detecting the rotation of the hub **64** is provided at the exterior of the drum **66.** The input side rotation sensor **93** is composed of a proximity sensor, for example.

As shown in FIG. **3** and FIG. **7**, an extended portion **91** is formed at the outer peripheral end of the piston **68** on the side open to the drum **66** (the transmission casing side wall **11a** side) so as to extend radially from the outer peripheral end thereof and extend further in the axial direction between the input side rotation sensor **93** and the drum **66.** The extended portion **91** forms notches **92** open to the output gear **33** side equally. The notches **92** are located below the input side rotation sensor **93** to function as a sensing rotor as a to-be-detected part at which the input side rotation sensor **93** detects the rotation of the hub **64**. Thus, the input side rotation sensor **93** detects the notches **92** of the piston **68** to detect the number of rotation of the turbine shaft **15**.

Further, as shown in FIG. **2****,** an output side rotation sensor **94** composed of a proximity sensor is provided at the exterior of the output gear **33** for detecting the number of rotation of the output gear **33** as an output.

Accurate detection of the respective numbers of rotations of the turbine shaft **15** and the output gear **33** by the input side rotation sensor **93** and the output side rotation sensor **94** enables speed change at appropriate timing, improving the shift quality.

### - Effects of the Embodiment -

Hence, in the automatic transmission in accordance with the present embodiment, the hydraulic servo **69** is provided inside the hub **64** connected to the turbine shaft **15** so that the piston **68** and the hub **64** rotate integrally with each other. This eliminates the need to create clearance for contact prevention between the piston **68** and the hub **64.** As described above, when the plurality of notched portions **70, 71** are formed in the piston **68** and the hub **64**, respectively, with their position displaced from each other in the peripheral direction and the parts of the hub **64** where the hub side notched portions **71** are not formed are inserted into the piston side notched portions **70** of the piston **68,** the piston **68** and the hub **64** are overlapped with each other in the axial direction. This shortens the length in the axial direction of the turbine shaft **15** to reduce the size of the automatic transmission **1.**

As described above, the hub **64** is provided inside the drum **66** to be covered with drum **66,** thereby disabling direct detection of the number of rotation of the hub **64.** While, the piston **68** and the hydraulic servo **69** are provided inside the hub **64** connected to the turbine shaft **15** so that the piston **68** and the hub **64** rotate integrally with each other. Accordingly, when the notches **92** as the to-be-detected part for the input side rotation sensor **93** is formed in the piston **68,** the input side rotation sensor **93** provided at the exterior of the drum **66** can detects the number of rotation of the hub **64** through the notches **92,** resulting in effective detection of the rotation of the piston **68** provided inside the hub **64** to achieve space-saving.

It should be noted that the above embodiment is substantially a mare preferred example and does not intend to limit the present invention and applicable subjects and use thereof.

## Claims

1. An automatic transmission which includes a first rotary member (60) connected to an input shaft (15) of the automatic transmission; a second rotary member (61) connected-to an output section (33) of the automatic transmission; a multiple-disc clutch (21) that connects/disconnects the first rotary member (60) to/from the second rotary member (61);
a hub (64) provided inside the multiple-disc clutch (21);
a drum (66) provided around the multiple-disc clutch (21);
a piston (68) which pushes the multiple-disc clutch (21); and
a hydraulic servo (69) that controls the piston (68), the hydraulic servo (69) being provided at the hub (64) or a member connected to the hub (64),
wherein a plurality of notched portions (70, 71) are formed in the piston (68) and the hub (64) with positions thereof displaced from each other in a peripheral direction, and
the piston (68) and the hub (64) are overlapped with each other in an axial direction in such a fashion that parts of one of the piston (68) and the hub (64) where no notched portions are formed are inserted into the notched portions (70 or 71) of the other,
the automatic transmission further comprises:
a transmission casing (11) surrounding the automatic transmission and including a transmission casing side wall (11a); and
a boss (72) which extends in the axial direction from an axial center of the transmission casing side wall (11a) and through which the input shaft (15) is inserted,
**characterized in that** the first rotary member (60) includes:
the hub (64);
a sleeve (73) rotatably fitted to the boss (72); and
a first annular portion (74) connecting the hub (64) and the sleeve (73).

2. The automatic transmission of Claim 1,
wherein the piston (68) includes:
a second annular portion (75) having an inner peripheral part sliding on an outer periphery of the sleeve (73) and extending radially outwardly;
a cylindrical portion (76) connected to an outer periphery of the second annular portion (75) and extending toward the transmission casing side wall (11a); and
a third annular portion (77) connected to an end part on the transmission casing side wall (11a) side of the cylindrical portion (76) and extending in a radial direction.

3. The automatic transmission of Claim 1 or 2, further comprising:
a sealing plate (79) which includes an inner peripheral part caught immovably toward the transmission casing side wall (11 a) by the outer periphery of the sleeve (73) and which extends radially outwardly so as to slide at an outer periphery thereof on an inner periphery of the cylindrical portion (76),
wherein the piston (68) forms a pressure chamber (86) in a region surrounded by the sleeve (73), the second annular portion (75), the cylindrical portion (76), and the sealing plate (79).

4. The automatic transmission of Claim 3,
wherein the sleeve (73) includes a fourth annular portion (85) cylindrically extending toward the transmission casing side wall (11a),
the second annular portion (75) includes an outer peripheral part sliding on an inner peripheral face of the fourth annular portion (85), and
the piston (68) forms a balancing chamber (88) in a region surrounded by the sleeve (73), the first annular portion (74), the fourth annular portion (85), and the second annular portion (75).

5. The automatic transmission of any of Claims 1 to 4,
wherein an operation oil supply guide (90) is formed in the first annular portion (74) for supplying operation oil to the hub (64) from an opposite side of the first annular portion (74) to the piston.

6. The automatic transmission of any of Claims 1 to 5, further comprising:
a rotation sensor (93) which detects rotation of the hub (64), the rotation sensor (93) being provided at an exterior of the drum (66),
wherein the piston (68) and the hydraulic servo (69) are provided at the hub (93) or a member connected to the hub (64), and
a to-be-detected part (92) at which the rotation sensor (93) detects the rotation thereof is provided at the piston (68).

7. The automatic transmission of Claim 6,
wherein the to-be-detected part (92) for the rotation sensor (93) extends radially from an outer peripheral end of the piston (68) on a side open to the drum (66) and further extends in the axial direction between the rotation sensor (93) and the drum (66).

## Patentansprüche

1. Automatikgetriebe, welches umfasst: ein erstes Drehelement (60), das mit einer Antriebswelle (15) des Automatikgetriebes verbunden ist; ein zweites Drehelement (61), das mit einem Abtriebsabschnitt (33) des Automatikgetriebes verbunden ist; eine mehrscheibige Kupplung (21), die das erste Drehelement (60) mit dem zweiten Drehelement (61) verbindet/es von diesem trennt;
eine in der mehrscheibigen Kupplung (21) vorgesehene Nabe (64);
eine um die mehrscheibige Kupplung (21) vorgesehene Trommel (66);
einen Kolben (68), der die mehrscheibige Kupplung (21) schiebt; und
ein hydraulisches Servoelement (69), das den Kolben (68) steuert, wobei das hydraulische Servoelement (69) an der Nabe (64) oder einem mit der Nabe (64) verbundenen Element vorgesehen ist;
wobei mehrere eingekerbte Abschnitte (70, 71) in dem Kolben (68) und der Nabe (64) ausgebildet sind, wobei deren Positionen in einer Umfangsrichtung voneinander versetzt sind, und
der Kolben (68) und die Nabe (64) einander in einer axialen Richtung so überlappen, dass Teile von dem Kolben (68) oder der Nabe (64), dort wo keine eingekerbten Abschnitte ausgebildet sind, in die eingekerbten Abschnitte (70 oder 71) des anderen eingesetzt sind,
wobei das Automatikgetriebe weiterhin umfasst:
ein Getriebegehäuse (11), das das Automatikgetriebe umgibt und eine Getriebegehäuseseitenwand (11a) umfasst; und
einen Vorsprung (72), der sich von einer axialen Mitte der Getriebegehäuseseitenwand (11a) in die axiale Richtung erstreckt und durch den die Antriebswelle (15) eingeführt ist,
**dadurch gekennzeichnet, dass** das erste Drehelement (60) umfasst:
die Nabe (64);
einen drehbar an dem Vorsprung (72) befestigten Mantel (73); und
einen ersten ringförmigen Abschnitt (74), der die Nabe (64) und den Mantel (73) verbindet.

2. Automatikgetriebe nach Anspruch 1, **dadurch gekennzeichnet, dass** der Kolben (68) umfasst:
einen zweiten ringförmigen Abschnitt (75) mit einem Innenumfangsteil, der auf einem Außenumfang des Mantels (73) gleitet und sich radial nach außen erstreckt;
einen zylindrischen Abschnitt (76), der mit einem Außenumfang des zweiten ringförmigen Abschnitts (75) verbunden ist und sich hin zu der Getriebegehäuseseitenwand (11a) erstreckt; und
einen dritten ringförmigen Abschnitt (77), der mit einem Endteil auf der Seite der Getriebegehäuseseitenwand (11a) des zylindrischen Abschnitts (76) verbunden ist und sich in eine radiale Richtung erstreckt.

3. Automatikgetriebe nach Anspruch 1 oder 2, welches weiterhin umfasst:
eine Dichtplatte (79), die einen Innenumfangsteil, der durch den Außenumfang des Mantels (73) unbeweglich hin zu der Getriebegehäuseseitenwand (11a) verfangen ist, umfasst und die sich radial nach außen erstreckt, so dass sie an einem Außenumfang derselben auf einem Innenumfang des zylindrischen Abschnitts (76) gleitet,
wobei der Kolben (68) eine Druckkammer (86) in einem von dem Mantel (73), dem zweiten ringförmigen Abschnitt (75), dem zylindrischen Abschnitt (76) und der Dichtplatte (79) umgebenen Bereich ausbildet.

4. Automatikgetriebe nach Anspruch 3, **dadurch gekennzeichnet, dass** der Mantel (73) einen vierten ringförmigen Abschnitt (85) umfasst, der sich zylindrisch hin zu der Getriebegehäuseseitenwand (11a) erstreckt,
der zweite ringförmige Abschnitt (75) einen Außenumfangsteil umfasst, der auf einer Innenumfangsfläche des vierten ringförmigen Abschnitts (85) gleitet, und
der Kolben (68) eine Ausgleichskammer (88) in einem von dem Mantel (73), dem ersten ringförmigen Abschnitt (74), dem vierten ringförmigen Abschnitt (85) und dem zweiten ringförmigen Abschnitt (75) umgebenen Bereich ausbildet.

5. Automatikgetriebe nach einem der Ansprüche 1 bis 4, **dadurch gekennzeichnet, dass** eine Betriebsölzufuhrführung (90) zum Versorgen der Nabe (64) mit Betriebsöl von einer dem Kolben gegenüberliegenden Seite des ersten ringförmigen Abschnitts (74) in dem ersten ringförmigen Abschnitt (74) ausgebildet ist.

6. Automatikgetriebe nach einem der Ansprüche 1 bis 5, welches weiterhin umfasst:
einen Drehzahlsensor (93), der die Umdrehung der Nabe (64) detektiert, wobei der Drehzahlsensor (93) an einer Außenseite der Trommel (66) vorgesehen ist,
wobei der Kolben (68) und das hydraulische Servoelement (69) an der Nabe (93) oder einem mit der Nabe (64) verbundenen Element vorgesehen sind und
ein zu detektierender Teil (92), an dem der Drehzahlsensor (93) die Umdrehung desselben detektiert, an dem Kolben (68) vorgesehen ist.

7. Automatikgetriebe nach Anspruch 6, **dadurch gekennzeichnet, dass** der zu detektierende Teil (92) für den Drehzahlsensor (93) sich radial von einem Außenumfangsende des Kolbens (68) auf einer zu der Trommel (66) offenen Seite erstreckt und sich weiterhin in die axiale Richtung zwischen dem Drehzahlsensor (93) und der Trommel (66) erstreckt.

## Revendications

1. Transmission automatique comprenant un premier élément rotatif (60) accouplé à un arbre d'entrée (15) de la transmission automatique ; un second élément rotatif (61) accouplé à une section de sortie (33) de la transmission automatique ; un embrayage multidisque (21) qui accouple le premier élément rotatif (60) au second élément rotatif (61) et le désaccouple de celui-ci ;
un moyeu (64) prévu à l'intérieur de l'embrayage multidisque (21) ;
un tambour (66) prévu autour de l'embrayage multidisque (21) ;
un piston (68) qui pousse l'embrayage multidisque (21) ; et
un servomécanisme hydraulique (69) qui commande le piston (68), le servomécanisme hydraulique (69) étant prévu au niveau du moyeu (64) ou d'un élément raccordé au moyeu (64) ;
dans laquelle une pluralité de portions entaillées (70, 71) sont formées dans le piston (68) et le moyeu (64) dans des positions décalées l'une par rapport à l'autre dans un sens périphérique, et
le piston (68) et le moyeu (64) sont imbriqués l'un dans l'autre dans un sens axial d'une façon telle que des parties du piston (68) et du moyeu (64) où aucune portion entaillée n'est formée sont insérées dans les portions entaillées (70 ou 71) de l'autre,
la transmission automatique comprenant en outre :
un carter de transmission (11) entourant la transmission automatique et comprenant une paroi latérale (11a) du carter de transmission ; et
un bossage (72) qui s'étend dans le sens axial à partir d'un centre axial de la paroi latérale (11a) du carter de transmission et à travers lequel l'arbre d'entrée (15) est inséré,
**caractérisée en ce que** le premier élément de rotation (60) comprend :
le moyeu (64) ;
une chemise (73) fixée au bossage (72) avec possibilité de rotation ; et
une première partie annulaire (74) accouplant le moyeu (64) et la chemise (73).

2. Transmission automatique selon la revendication 1, dans laquelle le piston (68) inclut :
une deuxième partie annulaire (75) présentant une partie périphérique intérieure glissant sur une circonférence extérieure de la chemise (73) et s'étendant radialement vers l'extérieur ;
une partie cylindrique (76) reliée à une circonférence extérieure de la deuxième partie annulaire (75) et s'étendant vers la paroi latérale (11a) du carter de transmission ; et
une troisième partie annulaire (77) reliée à une extrémité de la partie cylindrique (76) située du côté de la paroi latérale (11a) du carter de transmission et s'étendant dans un sens radial.

3. Transmission automatique selon la revendication 1 ou 2, comprenant en outre :
une plaque d'étanchéité (79) qui comprend une partie périphérique intérieure prise de façon fixe en direction de la paroi latérale (11a) du carter de transmission par la circonférence extérieure de la chemise (73) et qui s'étend radialement vers l'extérieur de façon à glisser au niveau d'une circonférence extérieure de celle-ci sur une circonférence intérieure de la partie cylindrique (76),
dans laquelle le piston (68) forme une chambre de pression (86) dans une région entourée par la chemise (73), la deuxième partie annulaire (75), la partie cylindrique (76) et la plaque d'étanchéité (79).

4. Transmission automatique selon la revendication 3,
dans laquelle la chemise (73) comprend une quatrième partie annulaire (85) s'étendant sous une forme cylindrique en direction de la paroi latérale (11a) du carter de transmission,
la deuxième partie annulaire (75) comprend une partie périphérique extérieure glissant sur une face périphérique intérieure de la quatrième partie annulaire (85), et
le piston (68) forme une chambre d'équilibrage (88) dans une région entourée par la chemise (73), la première partie annulaire (74), la quatrième partie annulaire (85) et la deuxième partie annulaire (75).

5. Transmission automatique selon l'une des revendications 1 à 4,
dans laquelle un guide d'alimentation en huile de service (90) est formé dans la première partie annulaire (74) pour alimenter le moyeu (64) en huile de service depuis un côté opposé de la première partie annulaire (74) jusqu'au piston.

6. Transmission automatique selon l'une des revendications 1 à 5, comprenant en outre :
un capteur de rotation (93) qui détecte la rotation du moyeu (64), le capteur de rotation (93) étant prévu à l'extérieur du tambour (66),
dans laquelle le piston (68) et le servomécanisme hydraulique (69) sont prévus au niveau du moyeu (93) ou d'un élément accouplé au moyeu (64), et
une pièce à détecter (92), au niveau de laquelle le capteur de rotation (93) détecte sa rotation, est prévue au niveau du piston (68).

7. Transmission automatique selon la revendication 6,
dans laquelle la pièce à détecter (92) pour le capteur de rotation (93) s'étend radialement depuis une extrémité périphérique extérieure du piston (68) sur un côté ouvert vers le tambour (66) et s'étend en outre dans le sens axial entre le capteur de rotation (93) et le tambour (66).
